Europäisches Patentamt

European Patent Office

Office européen des brevets

(19)

(11) Numéro de publication: **0 214 023**
**B1**

(12) **FASCICULE DE BREVET EUROPEEN**

(45) Date de publication du fascicule du brevet: **31.10.90**

(21) Numéro de dépôt: **86401744.7**

(22) Date de dépôt: **05.08.86**

(51) Int. Cl.⁵: **G 05 D 16/04,** F 17 C 13/00, F 16 K 1/30

(54) **Dispositif limiteur de débit pour robinets de bouteilles à gaz comprimé ou liquéfié sous pression.**

(30) Priorité: **14.08.85 FR 8512381**

(43) Date de publication de la demande:
**11.03.87 Bulletin 87/11**

(45) Mention de la délivrance du brevet:
**31.10.90 Bulletin 90/44**

(84) Etats contractants désignés:
**AT BE CH DE FR GB IT LI LU NL SE**

(56) Documents cités:
**EP-A-0 123 855**
**FR-A-1 286 061**
**US-A-2 553 763**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur: **Politi, Jean-Marie**
**10, rue Alfred de Musset**
**F-77340 Pontault-Combault (FR)**

(74) Mandataire: **Sadones Laurent, Renée et al**
**L'AIR LIQUIDE 75, quai d'Orsay**
**F-75321 Paris Cédex 07 (FR)**

**Description**

La présente invention concerne un dispositif limiteur de débit pour les bouteilles à gaz destinées à contenir un gaz comprimé ou liquéfié sous pression, couramment utilisés dans l'industrie et qui comportent un robinet usuel à clapet apte selon la position qu'on lui donne à fermer ou à ouvrir un circuit d'utilisation.

Certains gaz, utilisés dans l'industrie à l'état comprimé ou liquéfié sous pression, dans des bouteilles métalliques équipées d'un robinet, sont extrêmement toxiques, et/ou spontanément inflammables au contact de l'air.

De tels produits, en cas de fuite sur l'installation de mise en oeuvre, au-delà du robinet, ne sont pas sans danger, pour le personnel; ils peuvent aussi provoquer des dégats matériels importants, et une pollution atmosphérique.

On a déjà proposé des mesures de sécurité visant à minimiser les conséquences néfastes dûes à une fuite d'un gaz. La demande de brevet européen EP—A—0 123 855 décrit une sorte de cartouche susceptible de limiter un débit de fluite de gaz nocif formant au moins deux chambers en communication par un passage calibré, dont l'une dite chambre amont reçoit le gaz en provenance de la bouteille et dont l'autre dite chambre aval est en communication avec une canalisation d'utilisation; plus précisément la cartouche de limitation de débit est placée dans un logement prévu à cet effet dans la partie du raccord qui est solidaire de la conduite de distribution. Si cette disposition est susceptible de réduire les conséquences de nombreux cas de fuite indue de gaz nocif, elle n'est cependant pas complètement sûre car il existe certains risques d'oubli de mise en place de la cartouche de limitation de débit, par exemple si au cours d'une opération de maintenance du circuit de distribution vers le récepteur, l'utilisateur néglige de remettre en place la cartouche qu'il aurait retirée ou bien s'il change la conduite de distribution initialement équipée d'une telle cartouche par une autre conduite qui en serait dépourvue ou non conçue pour en être équipée.

De telles omissions et risques d'erreurs sont susceptibles d'avoir des conséquences très graves en cas de fuite au niveau du robinet. D'autre part, le limiteur de débit est sans effet sur les fuites qui se produisent à l'endroit du raccord au robinet, puisque le limiteur de débit est alors placé en aval par rapport à la jonction d'étanchéité.

La présente invention vise à minimiser encore les conséquences d'une telle fuite d'un gaz.

Elle propose à cet effet un dispositif limiteur de débit pour bouteille de gaz comprimé ou liquéfié comprenant un robinet monté sur ladite bouteille et une conduite de prélèvement de gaz branchée par un raccord sur un embout de sortie du corps de robinet, avec insertion d'une cartouche de limitation de débit, du genre rappelé ci-dessus, qui se caractérisé en ce que la cartouche de limitation de débit est placée dans un logement aménagé à cet effet dans le corps du robinet.

Suivant une forme de réalisation particulière, le robinet, du genre incorporant une chambre de détente, se caractérise en ce que la cartouche est aménagée pour former, outre la première chambre et le passage calibré, une troisième chambre formant ladite chambre de détente, avec en amont un clapet qui est associé à des moyens de commande tarés et, d'autre part, soumis à l'action d'un ressort de maintien. On rappelle ici pour mémoire que la disposition d'une chambre de détente ménagée dans un corps de robinet est bien connue en soi comme le montre le brevet français 1.286.061.

Un dispositif limiteur de débit à chambre de détente est appelé dans ce qui suit "limiteur détendeur", alors qu'un limiteur ne comprenant pas de chambre de détente est appelé "limiteur simple".

Une cartouche équipée avec un limiteur simple est plus ... particulièrement destinée à être associée à un robinet pour bouteille contenant un gaz sous faible pression, tandis qu'une cartouche équipée avec un limiteur détendeur est plus particulièrement destinée à équiper un robinet pour bouteille contenant un gaz sous pression élevée ainsi qu'on le verra plus loin.

Une telle disposition permet de limiter, à partir de la source elle-même, le débit de gaz disponible à une valeur la plus faible compatible avec l'utilisation.

Le dispositif limiteur de débit est bien entendu adapté en fonction de la pression du gaz en place dans la bouteille.

Etant donné que d'une part, le débit du gaz disponible est effectué à partir de la source elle-même, et que, d'autre part, ce débit a une valeur la plus faible possible compatible avec l'utilisation, on comprend qu'en cas de rupture de canalisation, au-delà du robinet, la fuite sera minimale alors que jusqu'ici, en cas de fuite entre le robinet et un quelconque détendeur, le gaz pouvait s'échapper avec une rapidité fonction de la fuite, avec tous les inconvénients rappelés succinctement plus avant.

Suivant une forme de réalisation dans le corps du robinet qui comprend de manière bien connu, une tête de robinet manoeuvrant un clapet, un embout pour raccorder le robinet à la bouteille, et un embout pour le raccord du circuit d'utilisation, on aménage dans ce dernier embout un logement apte à recevoir une cartouche, celle-ci étant disposée en aval dudit clapet.

Suivant une autre forme de réalisation, c'est l'embout que comporte le corps de robinet pour son assemblage amovible avec une bouteille, qui est aménagé pour recevoir une cartouche; celle-ci se trouve alors à l'intérieur même de la bouteille, en amont du clapet associé à la tête de robinet. Suivant une autre forme de réalisation, l'embout que comporte le corps de robinet pour l'assemblage amovible du robinet à la bouteille, est prolongé, vers l'intérieur de la bouteille, par un tronçon tubulaire sur lequel est rapportée, de toute manière convenable, une douille porte-cartouche qui est donc, étant donné la structure en cause, située à l'intérieur même de la bouteille, en amont du clapet associé à la tête de clapet.

Suivant une forme de réalisation du dispositif selon 1' invention, la cartouche est associée au robinet par vissage avec un taraudage que comporte ledit logement, et elle présente une face frontale—ou encore face avant—adaptée à coopérer avec un joint d'étanchéité préalablement mis en place dans le dit logement.

Suivant une autre caractéristique de l'invention la cartouche comprend dans sa chambre amont un clapet susceptible d'être actionné par une tige pousse-clapet solidaire de moyens de commande tarés, et entre la chambre amont et l'orifice calibré une chambre de détente communiquante avec la chambre aval.

Les robinets ainsi équipés d'une cartouche avec un dispositif limiteur simple, ou limiteur détendeur améliorent donc sensiblement la sécurité dans le circuit de distribution.

En effet, la détérioration du circuit de distribution de quelque nature qu'elle soit, proche ou éloignée de la bouteille, ne laisse échapper qu'une quantité minime de gaz (débit du gaz à une valeur la plus faible possible compatible avec l'utilisation alors que, jusqu'ici, en cas de détérioration de l'installation entre le détendeur et la bouteille, le gaz s'échappait librement tant que la tête du robinet n'était pas actionnée pour la fermeture du circuit.

D'autres caractéristiques et avantages de l'invention ressortiront d'ailleurs de la description qui va suivre donnée à titre d'exemple dans laquelle:

la figure 1 montre en coupe longitudinale une cartouche avec un dispositif limiteur de débit simple;

les figures 2 et 3 illustrent de manière partielle en coupe deux formes de réalisation de passages calibrés;

la figure 4 montre à grande échelle et en coupe longitudinale une cartouche avec un dispositif "limiteur détendeur";

la figure 5 est une vue en bout de la cartouche ci-dessus suivant la flèche F à la figure 4;

les figures 6 et 7 montrent en coupe longitudinale deux autres formes de réalisation d'une cartouche avec dispositif "limiteur détendeur";

les figures 8 à 13 illustrent, différents types de corps de robinet équipés d'une cartouche comprenant un quelconque limiteur de débit ci-dessus.

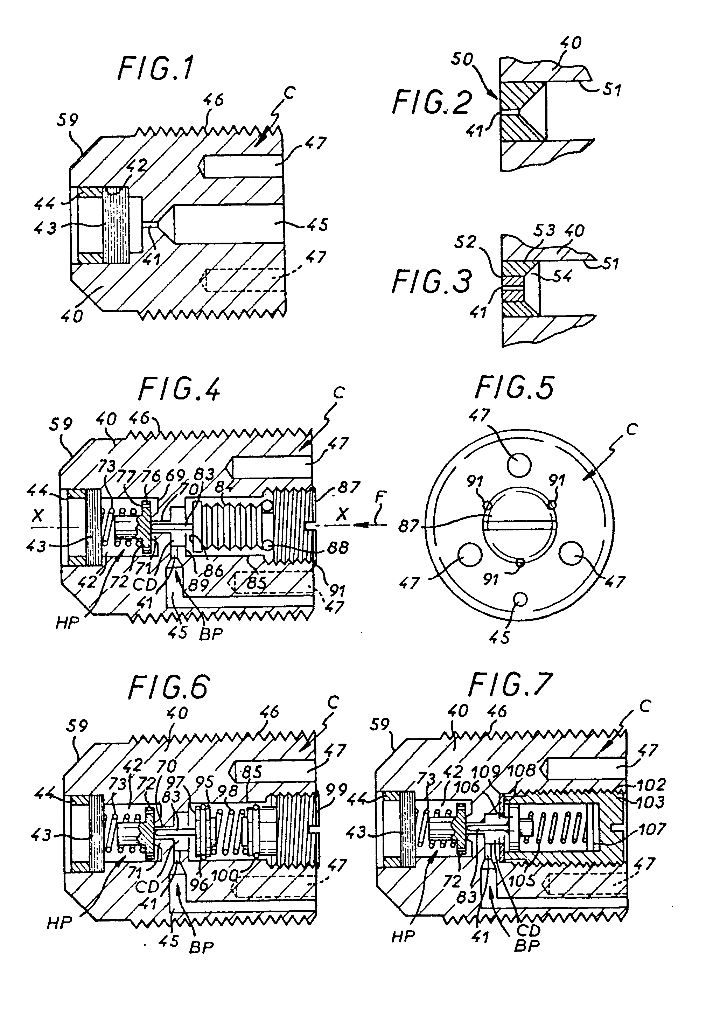

Suivant une forme de réalisation illustrée à la figure 1, il s'agit d'un dispositif limiteur de débit simple, comprenant une cartouche C. Cette cartouche comprend un corps 40 dans lequel sont ménagées de part et d'autre d'un passage calibré axial 41, une première chambre amont 42 apte à recevoir un filtre 43 maintenu par une bague de retenue 44, et une seconde chambre aval 45, les deux chambres ci-dessus étant espacées sur un même axe longitudinal.

On précise que la première chambre amont est ici, celle qui est destinée à recevoir le gaz en provenance de la bouteille, tandis que la chambre aval est celle qui est destinée à délivrer le gaz dans le circuit d'utilisation.

Le corps 40—cylindrique de révolution—est fileté sur sa surface extérieure en 46 pour permettre l'assemblage amovible de la cartouche dans un logement approprié ménagé à cet effet dans un corps de robinet ainsi qu'on le verra plus loin. Des trous borgnes 47—par exemple deux diamétraux—pratiqués sur la face arrière de la cartouche sont destinés à recevoir les broches d'un outil adapté (non représenté ici) pour son montage sur un corps de robinet, une telle disposition étant destinée à empêcher tout démontage par une personne non habilitée.

On peut remplacer les deux trous borgnes par une fente, ou encore par un double fente en croix.

Le passage calibré 41 qui, dans l'exemple représenté à la figure 1 est ménagé dans la masse du corps, peut aussi comme montré à la figure 2, être ménagé dans une couronne 50, rapporté à force dans un alésage 51. Il peut aussi, comme le montre la figure 3, être ménagé dans une bague 52 engagée dans une autre bague 53 emmanchée à force dans un alésage 51 prévus dans le corps 40, et ayant sur l'arrière une surface circulaire 54 divergente de l'intérieur vers l'extérieur.

Vers sa face avant, la cartouche C comporte une surface tronconique 59 dont l'utilité apparaîtra plus loin.

Un tel limiteur de débit simple convient fort bien lorsque la pression disponible à l'intérieur de la bouteille est modérée, et que la pression d'utilisation est faible, par exemple inférieure à cinq bars, et que, l'écart entre ces deux pressions est assez faible, par exemple lorsque la valeur de la pression dans la bouteille n'excède pas 4 à 5 fois celle de la pression d'utilisation.

Effectivement, pour un passge calibré donné, la variation de débit est sensiblement proportionnelle à la variation de pression en amont de ce passage.

Mais dans le cas où la pression disponible dans la bouteille est importante, par exemple supérieure à 20 ou 30 bars et/ou que l'on désire absolument limiter le débit de fuite au débit d'utilisation pendant toute la durée d'utilisation de la bouteille de gaz, il est nécessaire d'équiper celle-ci avec une cartouche "limiteur détendeur".

Suivant une forme de réalisation d'une cartouche C avec un dispositif "limiteur détendeur" montrée aux figures 4 et 5 celle-ci comprend un corps cylindrique de révolution 40 présentant une partie avant avec une surface tronconique 59.

Suivant l'axe X—X du corps 40 la cartouche comprend une première chambre 42 haute pression HP et une seconde chambre 45 basse pression BP. La première chambre est limitée par un fond 69 comportant un passage 70, et un siège de clapet 71, pour un clapet 72 maintenu en position par un ressort 73, en appui sur un filtre 43 qui est lui-même maintenu en place à l'aide d'une bague 44.

Le clapet 72 comporte dans une collerette 76 une série de trous 77 par exemple trois.

Entre le siège de clapet 71 et le passage calibré radial 41 le corps 40 comporte une chambre de détente CD qui communique avec la seconde chambre basse-pression 45 qui est ici formée par un canal débouchant sur la face arrière de la cartouche C.

Le passage 70 reçoit, avec jeu, une tige poussoir de clapet 83, solidaire de moyens de commande tarés, ces moyens sont avantageusement constitués par un soufflet métallique 84 mis en place dans un chambrage 85, en ayant une face frontale 86 en vis-à-vis de la chambre de détente CD, et une extrémité libre soumise à l'action d'une vis de réglage 87. Un joint torique 88 assure l'étanchéité, tandis que la face frontale 86 du soufflet métallique est apte à coopérer avec une portée 89 ménagée dans le fond du chambrage 85.

Des trous longitudinaux borgnes 47 permettent l'intervention d'une clé de manoeuvre adaptée, tandis que l'immobilité de la vis de réglage 87 par rapport au corps est avantageusement assurée par exemple à l'aide de points de soudure 91.

De manière semblable au corps de la cartouche C (figure 1), le corps de la cartouche comprend sur sa surface extérieure un filetage 46.

Le soufflet métallique 84 forme une capacité étanche et joue le rôle d'un ressort de détente; la pression du gaz à l'intérieur du soufflet, sert de pression de référence dont la force s'ajoute à celle du ressort formé par le soufflet métallique 84.

Une telle cartouche C peut être incorporée à un quelconque corps de robinet ainsi qu'on le verra plus loin.

Selon une variante de réalisation montrée à la figure 6, la cartouche C comprend un corps 40 analogue à celui décrit en regard de la figure 4 avec une première chambre amont 42 haute pression HP, et une chambre aval basse pression BP; la chambre amont haute pression comprend, comme précédemment, un filtre 43 maintenu par une bague 44, un clapet 72 soumis à l'influence d'un ressort de maintien 73, un siège de clapet 71, une chambre de détente CD, un passage radial calibré 41, et une chambre de détente formée par un conduit 45. Le corps comporte aussi des trous borgnes 47 pour un outil adapté, ainsi qu'un alésage 85 dans lequel est engagé, au lieu du soufflet métallique précité, un piston 95 avec joint périphérique 96; a face frontale 97 du piston est prolongée vers la chambre amont haute pression HP par une tige poussoir de clapet 83, montée coulissante avec jeu dans le passage 70, pour former un espace annulaire.

Sur sa face dorsale, le piston 95 coopère avec des moyens de commande tarés de la tige poussoir de clapet qui sont, dans le cas présent, constitués par un ressort de détente 98 dont la force peut être modulée au moyen d'une vis de réglage 99 ayant une partie terminale interne pourvue d'un joint d'étanchéité 100.

Suivant encore une autre forme de réalisation montrée à la figure 7, la cartouche C comprend un corps 40 globalement analogue aux précédents, avec une première chambre amont haute pression HP, une seconde chambre aval basse pression BP, et une chambre de détente CD; les mêmes références ont été reprises pour désigner des éléments déjà décrits en référence aux deux formes de réalisation précédentes.

Suivant cette forme de réalisation la cartouche C comprend des moyens de commande tarés de structure différente en ce sens qu'ils comprennent un taraudage 102 qui reçoit une vis creuse 103 dans laquelle est inséré un ressort 105 qui prend appui, par une extrémité sur une membrane 106 à laquelle est solidarisée la tige 83 poussoir de clapet, et par l'autre extrémité sur au moins une cale d'épaisseur 107.

A noter que l'extrémité interne 108 de la vis creuse 103 coopère avec un joint 109 propre à assurer l'étanchéité, tandis que la force de compression du ressort 105 peut être aisément réglée par mise en place d'une ou plusieurs cales d'épaisseurs convenables 107.

La membrane précitée 106 peut être quelconque par exemple plate, ondulée, ou bombée, en métal ou autre matériau approprié.

L'une ou l'autre des cartouches C, ci-dessus est apte à équiper différents types de robinets pour bouteilles contenant un gaz comprimé ou liquéfié sous pression.

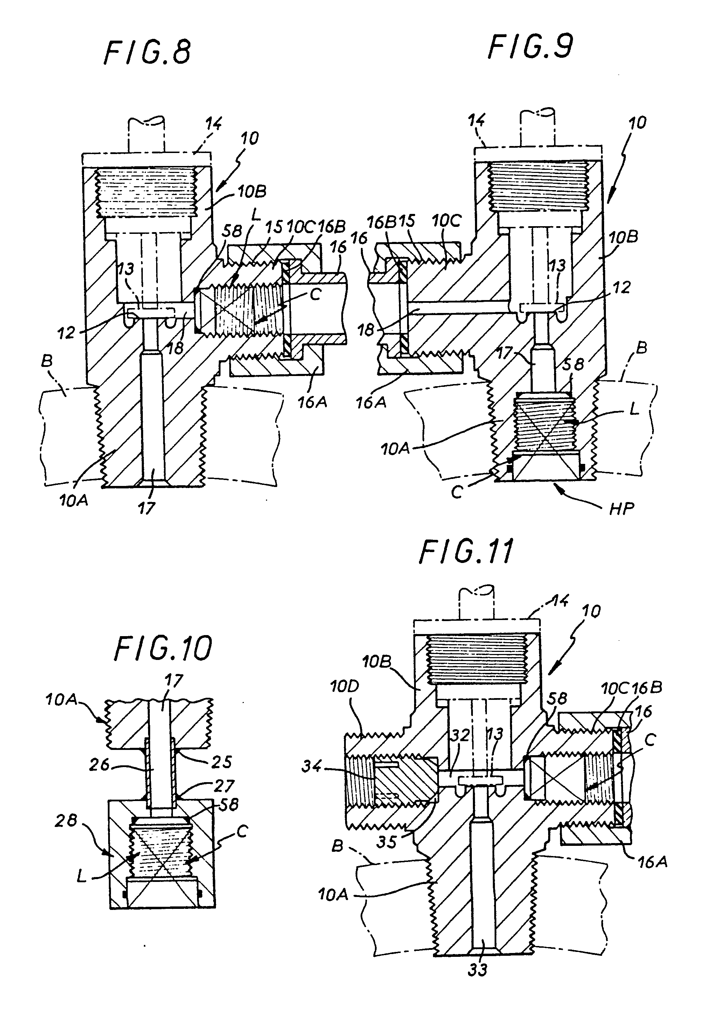

A la figure 8 le robinet comprend un corps 10 avec trois embouts respectivement 10A, 10B, 10C; l'embout 10A ou—queue de robinet—est destiné à être raccordé au col d'une bouteille B indiqué en traits discontinus; l'embout 10B comprend un siège 12 propre à coopérer avec un clapet 13 manoeuvrable au moyen d'une tête de robinet 14, quant à l'embout 10C sensiblement radial, il est fileté extérieurement en 15, en vue du raccord par écrou 16A et joint 16B d'une canalisation quelconque 16 vers le circuit d'utilisation. Intérieurement, le corps de robinet comprend un conduit 17 s'étendant dans l'embout 10A jusqu'au siège de robinet 12, et en aval dudit siège, vers l'embout 10C par un canal 18.

Suivant l'invention, l'embout 10C du corps de robinet 10, est aménagé intérieurement avec un logement taraudé L, apte à recevoir, de manière étanche, à l'aide d'un joint torique 58 coopérant avec la surface tronconique 59 une cartouche C; une telle cartouche est donc disposée en aval du clapet 13 sur le trajet du conduit mettant en communication l'intérieur de la bouteille avec le circuit d'utilisation; elle peut être selon le cas à dispositif limiteur simple ou à dispositif limiteur détendeur. A noter que le joint torique précité peut être remplacé par un joint plat, la partie avant de la cartouche étant aménagée à cet effet.

Dans la forme de réalisation montrée à la figure 9, le corps de robinet indiqué dans son ensemble par 10, comprend comme précédemment un premier embout 10A destiné à être raccordé au col d'une bouteille B; un second embout 10B aménagé pour la réception d'une tête de robinet 14 manoeuvrant un clapet 13 en regard du siège 12, un troisième embout 10C d'orientation perpendiculaire aux précédentes est prévu pour le raccordement, soit d'une canalisation 16 pour l'alimentation d'un quelconque appareil (non représenté), soit d'un moyen de mise sous vide, ou de remplissage.

Le corps de robinet comporte aussi un canal axial 17, et un second canal 18 ménagés dans l'embout 10C, ces deux canaux étant susceptibles d'être mis en communication ou isolés, selon la position donnée au clapet 13 sur son siège 12.

Tel que représenté, le premier embout 10A est aménagé avec un logement taraudé L pour recevoir une cartouche C.

On note que selon cette réalisation le remplissage de la bouteille B, ou sa mise sous vide, peut poser quelques problèmes du fait que de telles opérations passent obligatoirement selon le cas par la cartouche C. Pour l'emplissage, ou la mise sous vide, on raccorde le conduit 16 à l'embout 10C, puis on ouvre le clapet 13 de la tête de robinet 14, et une fois les opérations terminées on ferme ce clapet.

A la figure 10, l'embout 10A du corps de robinet est aménagé pour recevoir, par soudure 25, un tronçon de tube 26 auquel est solidarisée également par soudure 27 und douille 28 apte à recevoir une cartouche C.

Dans les deux formes de réalisation précitées et illustrées par les figures 9 et 10 la cartouche qui est placée sur le trajet du conduit 17, est disposée à l'intérieur de la bouteille, ce qui peut donner lieu à certaines limitations lors de l'utilisation ainsi qu'il a été énoncé plus haut.

Effectivement, on comprendra qu'il n'est pas possible dans les formes de réalisation montrées au figures 9 et 10, de démonter la cartouche C, en vue d'opérations de mise sous vide ou remplissage, de sorte que ces dernières sont nécessairement longues (circulation à travers le passage calibré).

De préférence, la cartouche C est incorporée au corps de robinet en étant extérieure à la bouteille B après le clapet 13 comme il est illustré aux figures 8, 11, 12, 13.

A la figure 8, il est possible—et préférable—de démonter la cartouche C, lorsqu'on doit faire le vide ou remplir la bouteille de gaz, afin de ne pas effectuer ces opérations sous des contraintes qui allongeraient la durée desdites opérations.

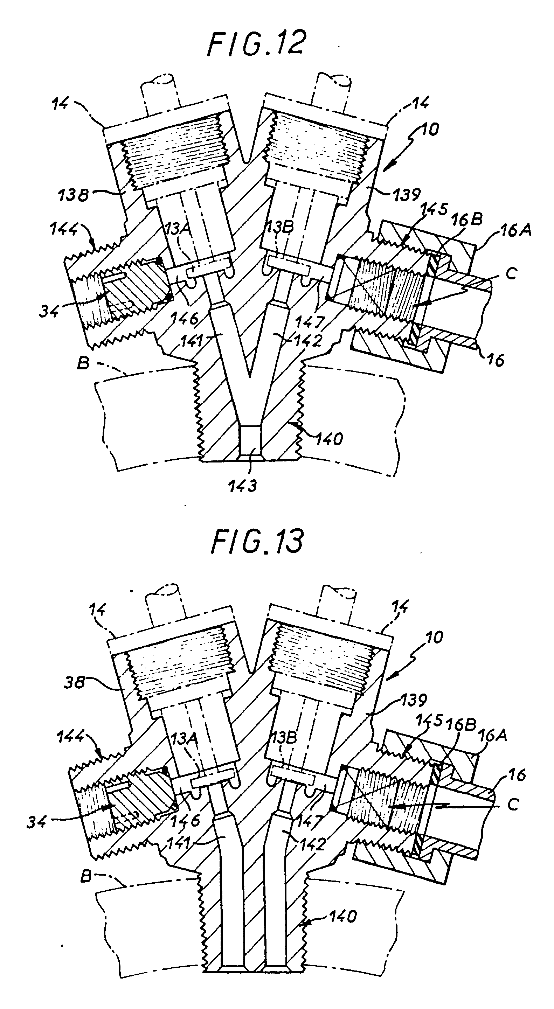

A la figure 11, le corps de robinet 10 comprend quatre embouts disposés en croix, un premier embout 10A forme une queue de robinet apte à être vissée sur le col d'une bouteille B, un second embout 10B est aménagé pour porter une tête de robinet 14 avec son clapet 13 coopérant avec un siège 12; perpendiculairement aux embouts précités 10A, 10B, le corps de robinet 10 comprend deux extensions formant des embouts 10C, 10D, situés de part et d'autre du clapet 13; un conduit 32, met en communication les deux embouts 10C, 10D, et un conduit 33 met en communication l'intérieur de la bouteille avec le conduit 32 lorsque le clapet 13 est ouvert. Une telle configuration est préférable à toute autre, car elle permet la mise sous vide et la purge de la chambre intérieure 18 du robinet correspondant à la chambre haute pression 42 du limiteur de débit.

L'un des embouts en l'espèce l'embout 10D, reçoit un bouchon amovible 34, et l'autre une cartouche C. Suivant cette forme de réalisation le bouchon 34, en appui sur un joint d'étanchéité 35 peut être ôté aisément pour mise sous vide ou remplissage de la bouteille B puis remise en place ensuite, ce qui évite ainsi toute contrainte lors desdites opérations.

A la figure 12, le corps 10 du robinet présente une configuration globalement en Y; les branches de l'Y forment deux embouts 138, 139, divergents aptes à recevoir chacun une tête de robinet 14, tandis que la branche unique de l'Y constitue un embout 140 formant une queue de robinet apte à être vissée sur le col d'une bouteille B; dans le prolongement de chaque tête de robinet, au-delà de chaque clapet 13A, 13B, partent des conduits 141, 142, qui se réunissent dans la queue de robinet pour ne faire qu'un seul conduit 143 dont l'orifice débouche à l'intérieur de la bouteille B.

Le corps de robinet ci-dessus, comporte aussi deux embouts latéraux 144, 145, sensiblement en vis-à-vis, qui sont aménagés l'un pour recevoir un bouchon 34, et l'autre une cartouche C.

En amont du clapet 13A, un canal 146 débouche dans l'embout 144, et en aval du clapet 13B un canal 147 débouche à l'intérieur de l'embout 145, en sorte que chaque clapet 13A, 13B peut être manoeuvré indépendamment en fonction des nécessités lors des diverses opérations, de remplissage, mise sous vide ou utilisation de la bouteille.

Le remplissage ou la mise sous vide d'une bouteille ainsi équipée est aisément réalisé par les conduits 146, 141, 143, après extraction du bouchon 34 et ouverture du clapet 13A, tandis que les conduits 143, 142, 147 sont aptes à diriger le produit vers l'utilisation, lorsque le bouchon 34 est à nouveau en place, et que le clapet 13A est fermé, tandis que l'autre clapet 13B est ouvert.

A la figure 13, le corps de robinet 10 est globalement analogue à celui décrit en regard de la figure 12, à la différence que chacun des conduits 141, 142, obturables par les clapets 13A, 13B, des têtes de robinet 14, débouchent chacun à l'intérieur de la bouteille B, l'un des embouts en l'espèce le 144 étant apte à recevoir un bouchon amovible 34, et l'autre une quelconque cartouche C ayant un dispositif limiteur simple, ou limiteur détendeur.

Suivant cette forme de réalisation, le remplissage, ou la mise sous vide de la bouteille B peut être effectué une fois le bouchon 34 ôté, le clapet 13A ouvert, et le clapet 13B fermé, tandis qu'en utilisation, c'est le clapet 13A qui est fermé, et le clapet 13B ouvert pour permettre la circulation du gaz à travers les conduits 146, 147, et une quelconque cartouche C, et de là vers l'utilisation.

Le débit de gaz délivré par le dispositif limiteur constitué par la cartouche C avec limiteur simple est bien entendu fonction de l'orifice du passage calibré.

Quant au dispositif "limiteur détendeur", le fonctionnement peut s'établir comme suit.

Lorsque le ou les clapets des têtes de robinets sont fermés il n'y a—bien entendu—pas de pression dans la chambre détente CD en amont du passage calibré 70. Le soufflet métallique (figure 4) 84 par sa force de détente propre, agit sur le clapet 72 par l'intermédiaire de la tige de poussoir de clapet 83, la course du soufflet métallique et, partant, de la tige de poussoir du clapet, est limitée par la butée de la face frontale 86 du soufflet sur le fond 89 de l'alésage 85.

Inversement, lorsque le robinet est ouvert, le circuit est mis en charge et la partie haute pression HP de la cartouche C reçoit du gaz, le clapet 72 est repoussé du siège 71 par le poussoir de clapet 83, d'où il résulte que le gaz est admis dans la chambre de détente CD à travers le passage 70 ménagé dans le siège du clapet; le gaz exerce une pression sur toute la face frontale du soufflet métallique 84 en comprimant celui-ci, et, de ce fait, la tige poussoir de clapet 83 recule. Le clapet 72 prend alors sa position de fermeture sur le siège 71 de sorte que l'admission du fluide à détendre est stoppée dans la chambre de détente 80. Lorsque la pression baisse dans la chambre de détente, la force du ressort 84 repousse le clapet 72 jusqu'à une position d'équilibre.

Le débit du gaz est déterminé par: la pression existante dans la chambre de détente CD, et la section de l'orifice calibré 81, et par la pression du circuit d'utilisation. La pression dans la chambre de détente est déterminée par le soufflet métallique 82 réglable en compression au moyen de la vis de réglage 87.

Le fonctionnement des cartouches C montrées aux figures 6 et 7 étant analogue à celui qui vient d'être décrit, il ne sera pas repris.

**Revendications**

1. Dispositif limiteur de débit pour bouteille destinée à recevoir du gaz comprimé ou liquéfié sous pression, comprenant un robinet (10) monté sur ladite bouteille (B) et une conduite de prélévement de gaz branchée par un raccord sur un embout (10A) de sortie du corps de robinet (10), avec insertion d'une cartouche de limitation du débit (C) formant au moins deux chambres (42, 45) en communication par un passage calibré (41), dont l'une (42) dite chambre amont débouche dans la bouteille (B) et dont l'autre (45) dite chambre aval est en communication avec une canalisation d'utilisation (16), caractérisé en ce que ladite cartouche (C) est placée dans un logement (L) aménagé à cet effet dans le corps de robinet (10).

2. Dispositif limiteur de débit suivant la revendication 1, du genre incorporant une chambre de détente, caractérisé en ce que la cartouche (C) logée dans le corps de robinet (10) est aménagée pour former, outre la première chambre (42) et le passage calibré (41), une troisième chambre (45) formant ladite chambre de détente (CD), avec en amont un clapet (72) qui est, d'une part, associé à des moyens de commande tarés (84, 98, 105) et, d'autre part, soumis à l'action d'un ressort de maintien (73).

3. Dispositif limiteur de débit suivant la revendication 2, caractérisé en ce que les moyens de commande tarés (84, 98, 105) insérés dans la cartouche (C) logée dans le corps de robinet (10) comprennent une tige pousse-clapet (83) associée à un soufflet (84) solidaire d'une vis de réglage (87).

4. Dispositif limiteur de débit suivant la revendication 2, caractérisé en ce que les moyens de commande tarés comprennent une tige pousse-clapet (83) associée à un piston (95) soumis à l'influence d'un ressort (9) lui-même susceptible de réglage axial en position à l'aide d'une vis (99).

5. Dispositif limiteur de débit suivant la revendication 2, caractérisé en ce que les moyens de commande tarés comprennent une tige pousse-clapet (83) associée à un piston (106) mobile dans un alésage ménagé dans une vis (103), ledit piston étant soumis à l'influence d'un ressort (105) dont la force de pression est réglable par rondelles (107).

6. Dispositif limiteur de débit suivant l'une quelconque des revendications 2—5, caractérisé en ce que le clapet (72) est apte à coopérer avec un siège (71) ménagé dans un voile séparant la chambre amont (42) de la chambre de détente (CD), ledit voile étant apte à ménager un passage annulaire (70) autour de latige pousse-clapet (83).

7. Dispositif limiteur de débit suivant l'une quelconque des revendications précédentes 2 à 6, caractérisé en ce que des moyens d'étanchéité (88, 96, 109) coopèrent avec les moyens de commande tarés.

8. Dispositif limiteur de débit suivant l'une quelconque des revendications précédentes, caractérisé en ce que la cartouche (C) comprend un corps cylindrique de révolution fileté (46) sur l'extérieur pour vissage dans le logement (L) que comporte à cet effet le corps de robinet (10).

9. Dispositif limiteur de débit suivant l'une quelconque des revendications précédentes, caractérisé en ce que la cartouche (C) présente sur une partie terminale destinée à être placée au fond du logement précité (L) une surface tronconique (59) adaptée à coopérer avec un joint d'étanchéité torique (58) ou une surface plane avec un joint plat, tandis que l'autre partie terminale présente au moins deux trous borgnes diamétraux (47) ou fente pour engagement d'un outil adapté.

10. Dispositif limiteur de débit suivant l'une quelconque des revendications précédentes, caractérisé en ce que la chambre amont (42) est adaptée à recevoir un filtre (43) maintenu en place par une bague de retenue (44).

11. Dispositif limiteur de débit suivant les revendications 1 et 2, caractérisé en ce que le passage calibré (41) est ménagé dans le corps (10) de la cartouche (C).

12. Dispositif limiteur de débit suivant l'une quelconque des revendications précédentes, caractérisé en ce que le passage calibré (41) est ménagé dans une bague (50) emmanchée à force dans un alésage du corps (10) de la cartouche (C).

13. Dispositif limiteur de débit suivant l'une quelconque des revendications précédentes, caractérisé en ce que le logement (L) que comporte le corps (10) de robinet pour recevoir la cartouche (C) est ménagé dans un embout (10C) recevant la canalisation du circuit de distribution.

14. Dispositif limiteur de débit suivant l'une quelconque des revendications précédentes, caractérisé en ce que le logement (L) que comporte le corps de robinet pour recevoir la cartouche (C) est ménagé dans un embout (10A) de raccordement du robinet à une bouteille (B).

15. Dispositif limiteur de débit suivant l'une quelconque des revendications précédentes, caractérisé en ce que le logement (L) que comporte le corps de robinet pour recevoir la cartouche (C) est ménagé dans une douille (28) prolongeant l'embout (10A) du robinet pour son raccordement à une bouteille (B).

16. Bouteilles pour gaz commprimé ou liquéfié sous pression comportant un robinet incorporant une cartouche (C) avec un dispositif selon l'une quelconque des revendications 1—15.

**Patentansprüche**

1. Durchflußbegrenzer für eine Flasche, die zur Aufnahme von Druckgas oder unter Druck stehendem Flüssiggas bestimmt ist, mit einem an der genannten Flasche (B) angebrachten Ventil (10) und einer Gasentnahmeleitung, die mit einem Anschlußteil an einem Ausgangsansatzstück (10A) des Ventilgehäuses (10) unter Zwischenschaltung eines Durchflußbegrenzereinsatzes (C) angeschlossen ist, der mindestens zwei durch einen kalibrierten Durchlaß (41) miteinander verbundene Kammern (42, 45) bildet, von denen die eine, als stromauf liegende Kammer bezeichnete Kammer (42) in die Flasche (B) ausmündet, während die andere, als stromab liegende Kammer bezeichnete Kammer (45) mit einer Nutzleitung (16) in Verbindung steht, dadurch gekennzeichnet, daß der genannte Einsatz (C) in einer zu diesem Zweck in dem Ventilgehäuse (10) vorgesehenen Aufnahme (L) angeordnet ist.

2. Durchflußbegrenzer nach Anspruch 1, ausgestattet mit einer Druckminderungskammer, dadurch gekennzeichnet, daß der in dem Ventilgehäuse (10) angeordnete Einsatz (C) so ausgeführt ist, daß außer der ersten Kammer (42) und dem kalibrierten Durchlaß (41) eine dritte Kammer (45) entsteht, die die genannte Druckminderungskammer (CD) bildet, mit einer stromauf gelegenen Ventilklappe (72), die einerseits geeichten Antriebsmitteln (84, 98, 105) zugeordnet und andererseits von einer Haltefeder (73) beaufschlagt ist.

3. Durchflußbegrenzer nach Anspruch 2, dadurch gekennzeichnet, daß die in den in dem Ventilgehäuse (10) untergebrachten Einsatz (C) eingefügten geeichten Antriebsmittel (84, 98, 105) einen Ventilklappenstößel (83) umfassen, der einem mit einer Einstellschraube (87) kraftschlüssig verbundenen Balg (84) zugeordnet ist.

4. Durchflußbegrenzer nach Anspruch 2, dadurch gekennzeichnet, daß die geeichten Antriebsmittel einen Ventilklappenstößel (83) umfassen, der einem Kolben (95) zugeordnet ist, der unter dem Einfluß einer Feder (98) steht, die ihrerseits mittels einer Schraube (99) axial verstellt werden kann.

5. Durchflußbegrenzer nach Anspruch 2, dadurch gekennzeichnet, daß die geeichten Antriebsmittel einen Ventilklappenstößel (83) umfassen, der einem Kolben (106) zugeordnet ist, der in einer in einer Schraube (103) vorgesehenen Bohrung verschiebbar ist, und daß der genannte Kolben unter der Wirkung einer Feder (105) steht, deren Druckkraft durch Unterlegscheiben (107) regulierbar ist.

6. Durchflußbegrenzer nach einem der Ansprüche 2 bis 5, dadurch gekennzeichnet, daß die Ventilklappe (72) mit einem Sitz (71) zusammenzuwirken vermag, der in einer Abdeckung ausgebildet ist, die die stromauf gelegene Kammer (42) von der Druckminderungskammer (CD) trennt, und daß die genannte Abdeckung einen Ringspalt (70) um den genannten Ventilklappenstößel (83) zu bilden vermag.

7. Durchflußbegrenzer nach einem der Ansprüche 2 bis 6, dadurch gekennzeichnet, daß Dichtungsmittel (88, 96, 109) mit den geeichten Antriebsmitteln zusammenwirken.

8. Durchflußbegrenzer nach einem der vorhergehenden Ansprüche, dadurch gekennzeichnet, daß der Einsatz (C) einen Rotationszylinder (46) aufweist, der ein Außengewinde trägt, so daß er in die Aufnahme (L) eingeschraubt werden kann, die zu diesem Zweck in dem Ventilgehäuse (10) vorgesehen ist.

9. Durchflußbegrenzer nach einem der vorhergehenden Ansprüche, dadurch gekennzeichnet, daß der Einsatz (C) an einem Endabschnitt, der gegen den Boden der genannten Aufnahme (L) geführt werden soll, eine kegelstumpfartige Fläche (59) aufweist, die mit einem Dichtring (58) oder einer mit einer flachen Dichtung versehenen ebenen Fläche zusammenzuwirken vermag, während der andere Endabschnitt mindestens zwei diametral angeordnete Sacklöcher (47) oder Schlitze zum Einführen eines geeigneten Werkzeugs aufweist.

10. Durchflußbegrenzer nach einem der vorhergehenden Ansprüche, dadurch gekennzeichnet, daß die stromauf liegende Kammer (42) ein Filter (43) aufzunehmen vermag, das von einem Sprengring (44) an seinem Platz gehalten werden kann.

11. Durchflußbegrenzer nach Anspruch 1 und 2, dadurch gekennzeichnet, daß der kalibrierte Durchlaß (41) in dem Hauptteil (40) des Einsatzes (C) angeordnet ist.

12. Durchflußbegrenzer nach einem der vorhergehenden Ansprüche, dadurch gekennzeichnet, daß der kalibrierte Durchlaß (41) in einem Ring (50) angeordnet ist, der in eine Bohrung des Hauptteils (40) des Einsatzes (C) eingepreßt ist.

13. Durchflußbegrenzer nach einem der vorhergehenden Ansprüche, dadurch gekennzeichnet, daß die in dem Ventilgehäuse (10) vorgesehene Aufnahme (L), für den Einbau des Einsatzes (C) in einem Ansatzstück (10C) ausgebildet ist, das die Leitung des Verteilerkreises aufnimmt.

14. Durchflußbegrenzer nach einem der vorhergehenden Ansprüche, dadurch gekennzeichnet, daß die in dem Ventilgehäuse vorgesehene Aufnahme (L) für den Einbau des Einsatzes (C) in einem Ansatzstück (10A) zum Abschließen des Ventils an eine Flasche (B) ausgebildet ist.

15. Durchflußbegrenzer nach einem der vorhergehenden Ansprüche, dadurch gekennzeichnet, daß die in dem Ventilgehäuse vorgesehene Aufnahme (L) für den Einbau des Einsatzes (C) in einer Büchse (28) ausgebildet ist, die das Ansatzstück (10A) des Ventils fortsetzt, um dieses an eine Flasche (B) anzuschließen.

16. Flaschen für Druckgas oder unter Druck stehendes Flüssiggas mit einem Ventil, das einen Einsatz (C) mit einer Vorrichtung nach einem der Ansprüche 1 bis 15 aufweist.

**Claims**

1. A flow limiter device for a bottle intended to receive compressed or liquefied gas under pressure, comprising a tap (10) mounted on the said bottle (B) and a gas take-off conduit joined via a connection to an outlet stub (10A) of the tap body (10), with insertion of a flow limiter cartridge (C) forming at least two chambers (42, 45) intercommunicating via a calibrated passage (41), of which the one (42), called the upstream chamber, leads into the bottle (B) and of which the other (45), called the downstream chamber, is in communication with a consumer pipe (16), characterised in that the said cartridge (C) is positioned within a recess (L) formed for the purpose in the tap body (10).

2. A flow limiter device according to claim 1, of the type incorporating an expansion chamber, characterised in that the cartridge (C) housed within the tap body (10) is arranged so as to form, apart from the first chamber (42) and the calibrated passage (41), a third chamber (45) forming the said expansion chamber (CD), with valve (72) upstream which is associated with calibrated control means (84, 98, 105) on the one hand and subject to the action of a retaining spring (73) on the other hand.

3. A flow limiter device according to claim 2, characterised in that the calibrated control means (84, 98, 105) inserted into the cartridge (C) housed in the tap body (10) comprises a valve-lifter rod (83) associated with a bellows (84) integral with an adjusting screw (87).

4. A flow limiter device according to claim 2, characterised in that the calibrated control means comprises a valve-lifter rod (83) associated with a piston (95) subject to the action of a spring (9) which is itself capable of axial adjustment in position by means of a screw (99).

5. A flow limiter device according to claim 2, characterised in that the calibrated control means comprise a valve-lifter rod (83) associated with a piston (106) movable in a bore formed in a screw (103), the said piston being subject to the action of a spring (105) the thrust force of which is adjustable by means of washers (107).

6. A flow limiter device according to any one of claims 2 to 5, characterised in that the valve (72) is adapted to co-operate with a seat (71) formed in a web separating the upstream chamber (42) from the expansion chamber (CD), the said web being adapted to provide an annular passage (70) around the valve-lifter rod (83).

7. A flow limiter device according to any one of the preceding claims 2 to 6, characterised in that sealing means (88, 96, 109) co-operate with the calibrated control means.

8. A flow limiter device according to any one of the preceding claims, characterised in that the cartridge (C) comprises a cylindrical body of revolution which is externally screw-threaded (46) for screwing into the recess (L) incorporated for this purpose in the tap body (10).

9. A flow limiter device according to any one of the preceding claims, characterised in that the cartridge has an end position intended to be positioned at the bottom of the aforesaid recess (L), a frustoconical surface (59) adapted to co-operate with a toroidal sealing joint (58) or a plane surface with a flat joint, whereas the other end position has at least two blind diametrical bores or slots (47) for insertion of an appropriate tool.

10. A flow limiter device according to any one of the preceding claims, characterised in that the upstream chamber (42) is arranged to receive a filter (43) held in position by a retaining ring.

11. A flow limiter device according to claims 1 and 2, characterised in that the calibrated passage (41) is formed in the body (10) of the cartridge (C).

12. A flow limiter device according to any one of the preceding claims, characterised in that the calibrated passage (41) is formed in a ring (5) force-fitted in a bore of the body (10) of the cartridge (C).

13. A flow limiter device according to any one of the preceding claims, characterised in that the recess (L) which the tap body (10) has for reception of the cartridge (C) is formed in a pipe stub (10C) receiving the pipe coming from the distribution circuit.

14. A flow limiter device according to any one of the preceding claims, characterised in that the recess (L) which the tap body has for reception of the cartridge (C) is formed in a pipe stub (10A) for connection of the tap to a bottle (B).

15. A flow limiter device according to any one of the preceding claims, characterised in that the recess (L) which the tap body has for reception of the cartridge (C) is formed in a sleeve (28) extending the pipe stub (10A) of the tap for its connection to a bottle (B).

16. Bottles for compressed or liquefied gases under pressure, comprising a tap incorporating a cartridge (C) with a device according to any one of claims 1 to 15.

FIG.1

FIG.2

FIG.3

FIG.4

FIG.5

FIG.6

FIG.7

## FIG.8

## FIG.9

## FIG.10

## FIG.11

## FIG.12

## FIG.13